(19) **Europäisches Patentamt** / **European Patent Office** / **Office européen des brevets**

(11) **EP 4 671 905 A1**

(12) # EUROPEAN PATENT APPLICATION

(43) Date of publication:
**31.12.2025 Bulletin 2026/01**

(21) Application number: **25179613.2**

(22) Date of filing: **28.05.2025**

(51) International Patent Classification (IPC):
**G05D 1/644** (2024.01)  **G05D 1/689** (2024.01)
**G05D 107/60** (2024.01)  **B25J 5/00** (2006.01)
**B25J 9/16** (2006.01)  **G05D 1/246** (2024.01)
**G05D 109/10** (2024.01)

(52) Cooperative Patent Classification (CPC):
**B25J 5/007; B25J 9/1664; B25J 9/1694;**
**G05D 1/2465; G05D 1/644; G05D 1/6895;**
G05D 2107/63; G05D 2109/10

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **28.06.2024 US 202418758950**

(71) Applicant: **INTEL Corporation**
**Santa Clara, CA 95054 (US)**

(72) Inventor: **CAMPOS MACIAS, Leobardo**
**44240 Guadalajara (MX)**

(74) Representative: **HGF**
**HGF Limited**
**4th Floor, 1 City Square**
**Leeds LS1 2AL (GB)**

(54) **AUTONOMOUS NAVIGATION SYSTEM FOR MOBILE ROBOTS**

(57) An apparatus, including: an interface operable to receive sensor data and generate a map representation of an environment of a robot; processing circuitry operable to: plan a sequence of states to direct the robot to a task goal of the robot based on the map representation and a kinematic state of the robot for a plurality of degrees of freedom; determine a time-dependent trajectory of the robot to the task goal based on the sequence of states by dynamically enabling or disabling one or more of the plurality of degrees of freedom; and generate a movement instruction to control movement of the robot based on the time-dependent trajectory.

FIG 1

100
Autonomous Navigation System
for Mobile Robots

## Description

### Technical Field

Aspects described herein generally relate to autonomous navigation for mobile robots and, more particularly, to autonomous navigation for mobile robots with dynamic adjustment of the robot's degrees of freedom to minimize a cost function.

### Background

The movement and manipulation of robotic systems using a single motion algorithm are complicated due to the high dimensionality of the mobility space. For instance, a wheeled mobile robot equipped with a six-degrees-of-freedom robotic arm results in a search state space of twenty-seven dimensions-comprising nine dimensions for position, nine for velocity, and nine for acceleration. Additionally, the autonomy algorithm and the mechatronic design are typically handled separately, further complicating the application of these platforms in specific scenarios. This separation makes it challenging to develop a platform capable of operating in an autonomous or semi-autonoPmous manner.

Typically, mobile manipulator platforms are designed with a decoupled architecture, where the mobile base and the robotic arm are treated as separate units. Existing navigation algorithms for such platforms involve handling the movements of the mobile base and the robotic arm in a sequential manner to reach a target. This sequential approach forfeits several potential benefits, such as the ability to reposition the arm to avoid obstacles, manipulate objects while the mobile base is in motion, and optimally position the end-effector to leverage inertial energy efficiencies.

### Brief Description of the Figures

FIG. 1 illustrates an autonomous navigation system for mobile robots, in accordance with aspects of the disclosure.

FIG. 2 illustrates a Hybrid Ground Autonomous Manipulator Vehicle (HGAMV) in voxelized map representation, in accordance with aspects of the disclosure.

FIG. 3 illustrates a replanning supervisor, in accordance with aspects of the disclosure.

FIG. 4 illustrates geometric motion planning pseudocode, in accordance with aspects of the disclosure.

FIG. 5 illustrates a directed graph with dynamic state generation, in accordance with aspects of the disclosure.

FIG. 6 illustrates a linear actuator sequence to transform between a fixed and mobile robot base, in accordance with aspects of the disclosure.

FIG. 7 illustrates a computing device, in accordance with aspects of the disclosure.

FIG. 8 depicts a neural network, in accordance with aspects of the disclosure.

### Detailed Description

The present disclosure is directed to an autonomous navigation system incorporating a motion planning algorithm for mobile robots. This algorithm is designed to dynamically adjust the state search space, thereby enhancing computational speed and adaptability for robots with high-dimensional configurations. Additionally, the robot may have a mechatronic design, termed a Hybrid Ground Autonomous Manipulator Vehicle (HGAMV), for an industrial robotic platform assistant with two-wheeled motors and an extra actuator that transforms the platform into a fixed or mobile robotic arm.

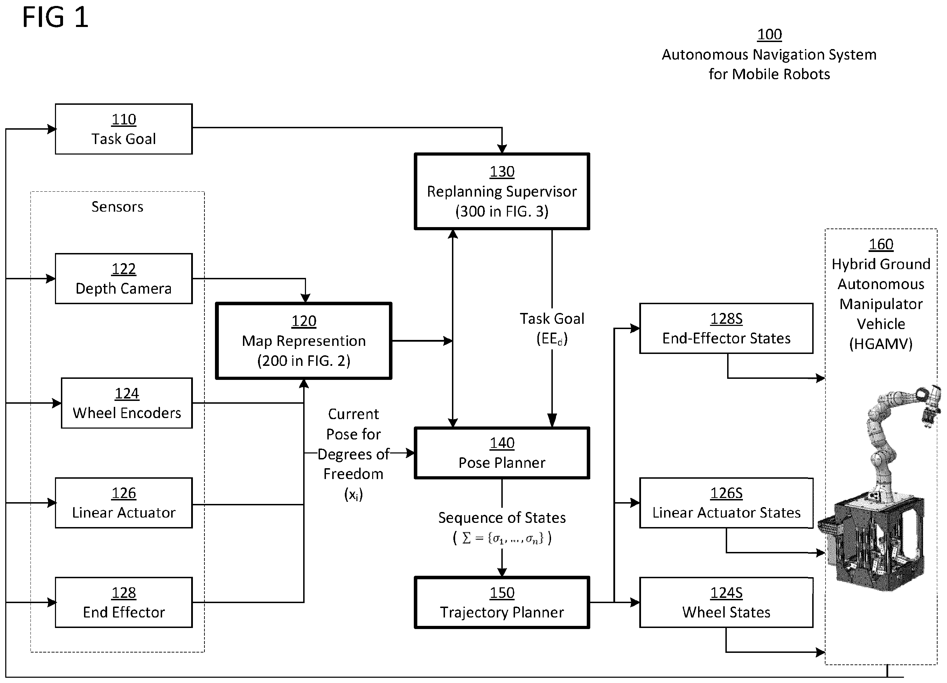

FIG. 1 illustrates an autonomous navigation system 100 for mobile robots, in accordance with aspects of the disclosure.

The system 100 may be composed of the following components: an input for a task goal 110, various sensors, a map representation 120, a replanning supervisor 130, a pose planner 140, a trajectory planner 150, and a hybrid ground autonomous manipulator vehicle (HGAMV) 160. The HGAMV 160 may be simply referred to herein as a robot, mobile robot, cobot, or mobile cobot, and may additionally include a mobile platform.

By way of overview, system 100 is designed to gather depth image data, wheel encoder positions, linear actuator positions, and the end-effector joint positions on top of the mobile platform. It receives the task goal 110 for robot 160, and outputs the trajectory for the low-level controllers, that is, the angular positions, velocities, and accelerations for the motor wheels, linear actuator, and end-effector. This system 100 is adaptable to any robotic end-effector degrees of freedom or mobile platform model.

This disclosure focuses on the integration of the map representation 120, the replanning supervisor 130, the pose planner 140, and the trajectory planner 150.

The task goal 110 may be of an end-effector $EE_d$ of the robot 160, although the system 100 is not limited in this regard; the task goal 110 may pertain to any operational aspect of the robot 160.

The sensors may comprise a depth camera 122 (e.g., LiDAR), wheel encoders 124, and a linear actuator 126. The sensors are operable to provide data that assists in generating a map representation 120 of the robot's environment, pivotable for motion planning, especially for collision-checking methods.

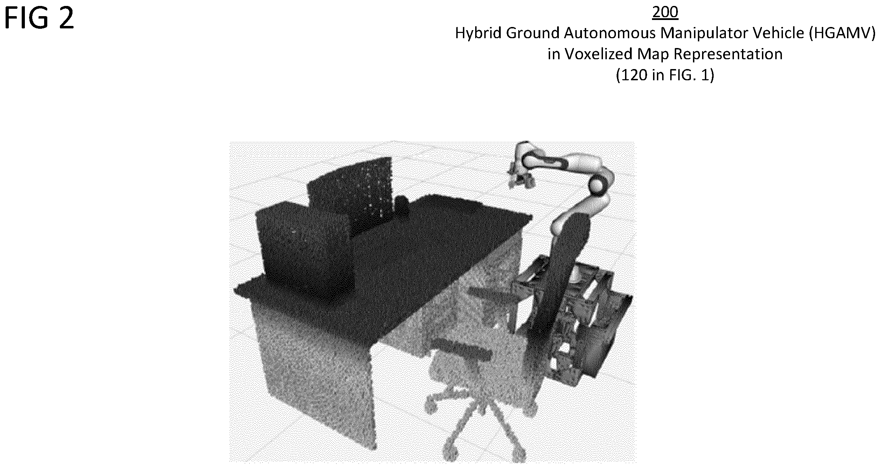

The map representation 120 utilizes depth information or a disparity image, enhanced with odometry and joint positions, to represent the environment while the robot 160 progresses towards its task goal 110. This map representation 120 is generated using advanced techniques such as disparity image input and voxel map representation via a linear octree data structure with a hashing function for Cartesian-to-voxel key mapping. FIG. 2 illustrates a Hybrid Ground Autonomous Manipulator Vehicle (HGAMV) in voxelized map representation 200, by way of example. Nonetheless, any mapping method may be incorporated.

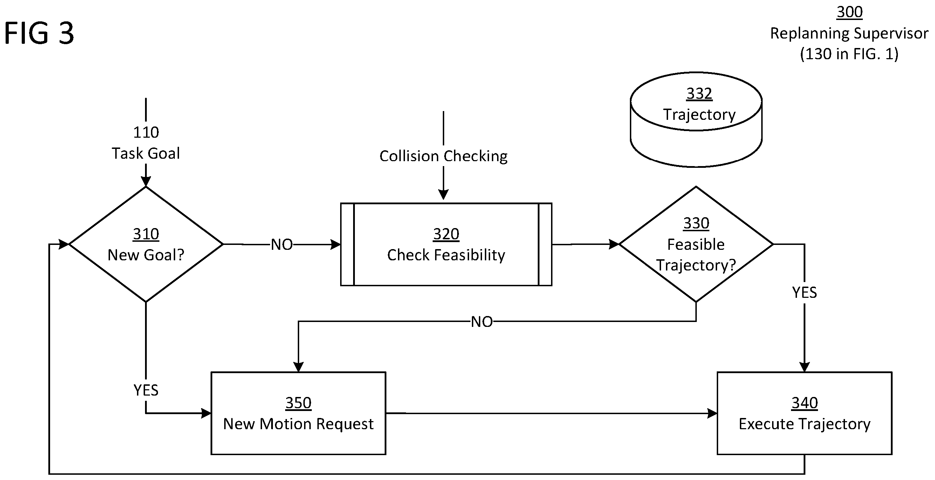

The replanning supervisor 130 is operable to assess a feasibility of the time-dependent trajectory, details of which are further discussed with respect to FIG. 3.

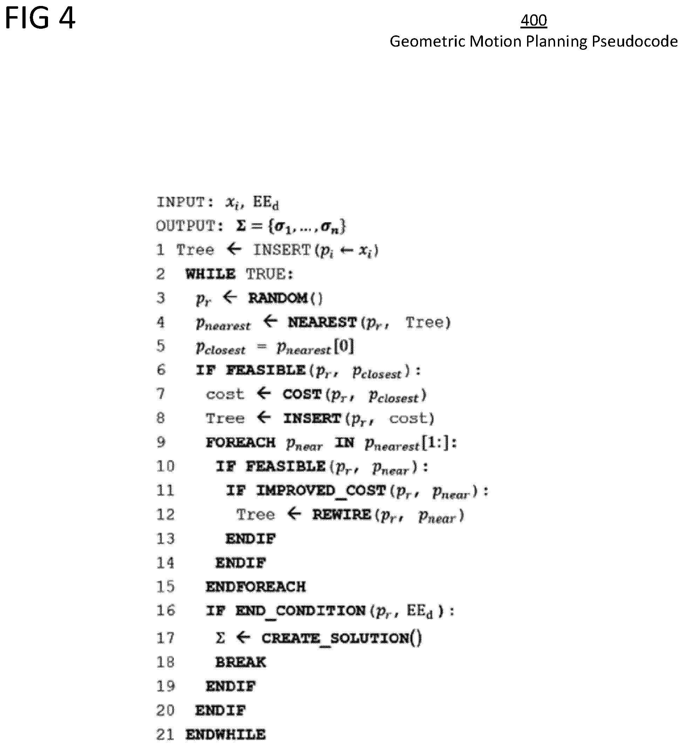

The pose planner 140 is operable to plan a sequence of states to direct the robot 160 towards the task goal 110, based on both the map representation 120 and the kinematic state of the robot 160 across multiple degrees of freedom, details of which are further discussed with respect to FIG. 4.

The trajectory planner 150 is operable to determine a time-dependent trajectory of the robot 160 aiming at the task goal 110 based on the sequence of states $\Sigma = \{\sigma_1, ..., \sigma_n\}$. It achieves this by dynamically enabling or disabling one or more of the plurality of degrees of freedom to minimize a cost function (e.g., based on distance, velocity, jerk, time, and/or stability) during trajectory planning. The trajectory planner 150 also considers whether the mobile base needs to move for the end-effector to reach the task goal 110, dynamically enabling or disabling this mobility as required.

The trajectory planner 150 is operable to determine a time-dependent trajectory for the robot 160 that guides it toward the task goal 110. This trajectory is computed based on a discrete sequence of states, denoted as $\{\sigma_1, ..., \sigma_n\}$, or $\Sigma = \{\sigma_1, ..., \sigma_n\}$, where each state $\sigma_i$ represents a specific configuration of the robot at a corresponding time step.

Each state $\sigma_i$ reflects the robot's instantaneous motion characteristics and DoF activation at time $t_i$, and examples may comprise:

**[0018]** - the position of each active degree of freedom (DoF) at time step i including joint angles for articulated arms, the pose $(x, y, \theta)$ of a mobile base, and any linear actuator positions:

$$\sigma_i^{\text{config}} = [q_1(t_i), q_2(t_i), ..., q_k(t_i)].$$

The time derivatives of the DoF values, such as joint velocities or base speeds:

$$\sigma_i^{\text{vel}} = [\dot{q}_1(t_i), \dot{q}_2(t_i), ...].$$

A binary vector indicating which DoFs are active (1) or disabled (0) at time $t_i$, used for dynamic DoF management during planning:

$$\sigma_i^{\text{mask}} = [d_1, d_2, ..., d_k] \in \{0,1\}^k.$$

By reasoning over this structured representation, the trajectory planner can dynamically enable or disable specific DoFs at each time step to minimize a trajectory cost function that may include factors such as path length, velocity, jerk, execution time, and control stability.

The trajectory planner 150 also evaluates whether motion of the mobile base is required for the end-effector to reach the task goal 110. If appropriate, base mobility is enabled or suppressed accordingly, allowing the planner to exploit stationary configurations when appropriate to reduce power consumption and enhance precision.

As an example, consider a scenario where the object targeted by the end-effector of robot 160 is within its physical reach without moving the mobile base. In such cases, the movement of the mobile base is unnecessary for the end-effector to achieve the task goal 110. The trajectory planner 150 dynamically deactivates this mobility during the trajectory planning process to eliminate a degree of freedom. This flexibility in the degree of freedom optimizes the navigation efficiency, computational efficiency, and adaptability of the robot.

The trajectory planner 150 is also operable to generate end-effector states 128S, linear actuator states 126S, and/or wheel states 124S of a movement instruction to control movement of the robot 160 and/or its mobile base based on the time-dependent trajectory.

The time-dependent trajectory is based on position, velocity, and acceleration. Previous approaches handle these parameters separately, initially creating a trajectory based solely on the position that the mobile base and the robot 160 must achieve. Typically, these earlier solutions did not provide corresponding velocities or accelerations for the models to effectively track.

FIG. 3 illustrates a replanning supervisor 300, in accordance with aspects of the disclosure.

The replanning supervisor 300 (previously introduced as 130 in FIG. 1) is responsible for verifying new task goal 110 and assessing the feasibility of the current trajectory. Initially, the replanning supervisor 300 determines if a new task goal 110 is requested, as shown in Step 310. If a new task goal 110 is identified, it requests a new motion for the new task goal 110 at Step 350, leading to the abandonment of the current trajectory.

If there are no new task goals, the replanning supervisor 130 proceeds to assess the feasibility of the existing time-dependent trajectory at Step 320. This assessment involves checking for potential collisions using the current map representation 120, comparing it against an updated map representation generated as the robot 160 progresses towards the task goal 110. Should the existing trajectory be feasible, a portion of the trajectory plan is executed as depicted in Step 340.

Conversely, if the trajectory is deemed not feasible, the pose planner 140 and the trajectory planner 150 devise a new sequence of states represented as $\Sigma = \{\sigma_1, \ldots, \sigma_n\}$, and determine a new time-dependent trajectory for robot 160 at Step 350. During this process, the replanning supervisor 300 may either preserve a portion of the trajectory that corresponds to the duration required to plan the new sequence of states $\Sigma = \{\sigma_1, \ldots, \sigma_n\}$, thereby ensuring continuity in trajectory transitions, or it may opt to disregard the current trajectory entirely.

FIG. 4 illustrates geometric motion planning pseudocode 400 utilized by the pose planner 140, in accordance with aspects of the disclosure.

The input to the pseudocode 400 includes the current pose of all degrees of freedom, represented as $x_i$, and the task goal 110, specified here as the end-effector task goal $EE_d$. This task goal may be defined in various forms such as the desired configuration for all states (nodes) or the final position of the robot and/or mobile base, but for this discussion, it is the end-effector task goal $EE_d$. The output of the pseudocode 400 is a sequence of states $\Sigma = \{\sigma_1, \ldots, \sigma_n\}$ that navigates the robot 160 from its initial configuration to the task goal $EE_d$.

Starting from the initial state, pseudocode 400 considers only the robot's position, such as the joint positions and the base x, y, and $\psi$ coordinates, represented as $p_i \in R^N$, where $N$ is the dimensionality of the search space. This initial position $p_i$ serves as the root node for a directed graph 500. The pseudocode 400 then generates random samples within the limits of the joints or map representation 120/300 using a uniform distribution. The samples are selected based on a probability $\lambda$, returning $n \leq N$ random samples for each state, focusing potentially on moving just the joints of the robotic arm, just the mobile base, or all robot portions simultaneously.

For each node position in the directed graph 500, the pseudocode 400 calculates the L2 distance to the random position $p_r$ and identifies nodes within a certain radius, as is known. It retains the position of corresponding nodes if any positions are missing. The pseudocode 400 then selects the nearest node, checks for self-collisions and environmental collisions (as indicated in line 6), and if the checks are cleared, the cost is computed and the node is inserted into the directed graph 500 with the closest node $p_{nearest}$ as its parent. While the L2 norm is used as the cost measure, adjustments can be made to minimize movements of the end-effector or the mobile base, thereby not restricting finding the solution.

The pseudocode 400 then determines potential new connections in the directed graph 500, considering a random position $p_r$ as the parent node of the remaining nodes in the list $p_{nearest}$, ensuring an asymptotically optimal solution based on the cost function.

The process concludes when the random position $p_r$ is close to the end-effector task goal $EE_d$ to a threshold, as indicated by:

$$\|p_r - EE_d\| \leq \varepsilon. \qquad \text{(Equation 1)}$$

For the purposes of this discussion, the pseudocode 400 calculates the forward kinematics for joints corresponding to random positions $p_r$, obtaining the Cartesian location of the end-effector $EE_r$, and determines if a solution is found. The sequence of positions $\Sigma = \{\sigma_1, \ldots, \sigma_n\}$ is then finalized and forwarded to the trajectory planner 150.

Of particular note is that line 3 of the pseudocode relates to generating random samples to enable or disable potential movements of the robot 160, while maintaining the time continuity of the trajectories. Also, lines 7 and 11 of the pseudocode relate to cost function, for example, Euclidean distance, to optimize movement. This approach allows robot 160 to aim for the task goal 110 by moving the minimal required distance. Unlike prior sampling-based techniques, this approach dynamically changes the robot's state space, offering more flexibility to reconfigure while planning to efficiently reach the goal or applying a heuristic-function-based approach to optimize costs such as minimizing movements, minimizing distance, and maximizing velocity.

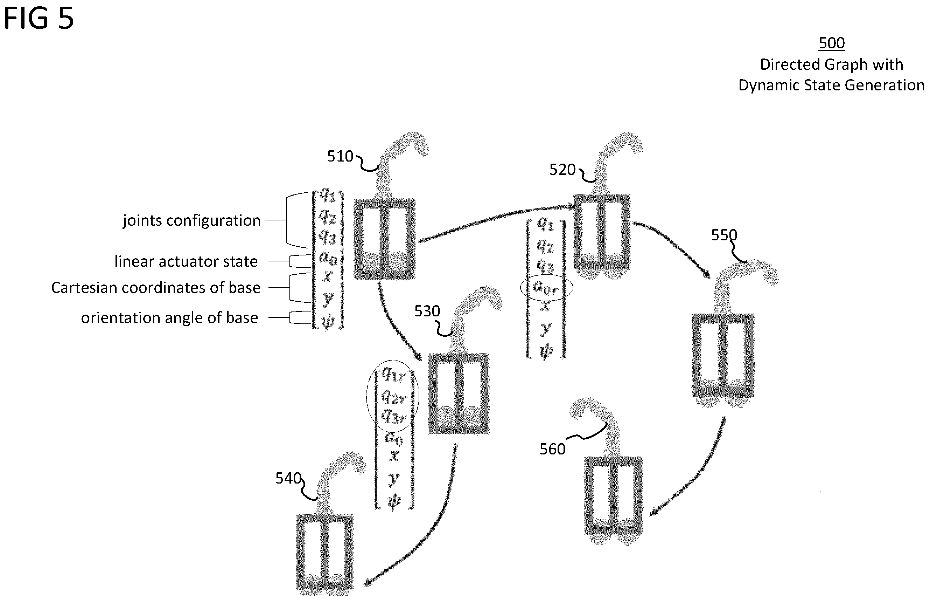

FIG. 5 illustrates a directed graph 500 with dynamic state generation, in accordance with aspects of the disclosure.

The time-dependent trajectory of the robot 160 towards the task goal 110 is determined by sampling random states, represented as nodes 510-560 of the directed graph 500. The trajectory planner 150 dynamically enables or disables one or more degrees of freedom by selecting nodes where the cost function is minimized. This cost function can include parameters such as distance, velocity, jerk, time, or robot stability.

The root node 510 with current positions $[q_1, q_2, q_3, a_0, x, y, \Psi]$ corresponding to the joint positions of the end-effector ($q_1, q_2, q_3$), the linear actuator $[a_0]$, which converts the base to a mobile base, and the Cartesian coordinates of the mobile base ($x, y, \Psi$). Subsequently, new random configurations are generated to change the positions of different states: node 520 changes the state of the linear actuator only (denoted with $a_{0r}$), and node 530 changes the joints configuration (denoted with $q_{1r}, q_{2r}, q_{3r}$). This pattern of state changes progressively extends the directed graph 500 toward the task goal 110.

The trajectory planner 150 then takes the sequence of geometric positions and generates a set of velocities, accelerations, and jerks, adhering to the dynamic constraints imposed by the robot 160. This facilitates quicker generation of motion plans and reduces the search state space burden for the pose planning algorithm. Each degree of freedom is considered to be an individual part free particle, and the trajectory to be generated by a chain of integrators driven by precalculated input dynamics, applicable across any number of states in the robot 160. For each state defined as $x_1$ (Cartesian or angular position); $\dot{x}_1$ (velocity); $\ddot{x}_1$ (acceleration); and $\dddot{x}_1$ (jerk), the method is iterated. The description provided pertains to the first state; however, the last state serves as the input driving the integrator chain along the geometric path.

The method is based on establishing an invariant stable set $\varepsilon(t)$ at the origin (the current state position), then shifting the equilibrium point along the first pair of geometric positions to ensure all system states remain within the set. The process repeats until reaching the final position.

The invariant set $\varepsilon(t)$ is defined to meet the physical constraints of the robot 160, defined by maximum permissible values for velocity, acceleration, jerk, and a maximum contouring error, the allowable deviation from the original geometric position. As this set is invariant, the derivatives are constrained within it at all times. The dynamic input $\dot{s}(t)$, derived from:

$$\dot{s}(t) = \frac{\theta b \gamma}{\|\mu\|}, \qquad\qquad \text{(Equation 2)}$$

and from:

$$b = \min\{e_1, V_1, A_1, J_1\}, \qquad\qquad \text{(Equation 3)}$$

(maximum contouring position error, velocity, acceleration, and jerk for state 1, respectively), $\theta$ is a design parameter ($0 < \theta < 1$), $\gamma$ a constant based on the selected control law, and $\|\mu_1\| = [\sigma_1[1] - \sigma_1[0], 0, ..., 0]$ is the distance between the geometric points. A snap control input is selected to enhance the invariant set to match the maximum bounds.

For robot 160 as a HGAMV, the snap may be represented as:

$$s(t) = -12.0 e_p(t) - 21 v(t) - 10. a(t), \text{ and} \qquad\qquad \text{(Equation 4)}$$

the derivative of the snap as:

$$\dot{s} = \frac{10}{\|\mu\|}. \qquad\qquad \text{(Equation 5)}$$

These equations ensure that while navigating through geometric positions, all derivatives remain within the bounds of the invariant set $\varepsilon(t)$.

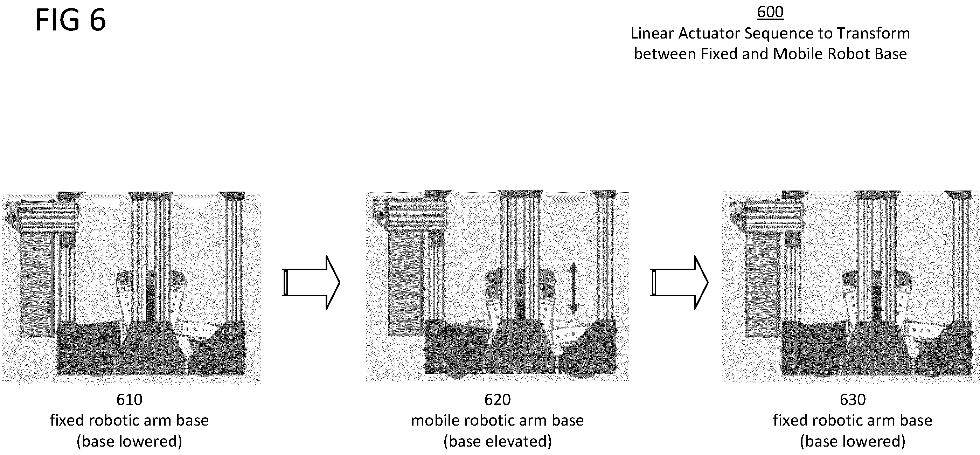

FIG. 6 illustrates a linear actuator sequence 600 to transform between a fixed and mobile robot base, in accordance with aspects of the disclosure.

In this exemplary implementation, the HGAMV 160 is equipped with two actuated wheels configured in a differential drive arrangement and includes an extra linear actuator designed to elevate or lower the entire platform. This configuration allows the platform to be grounded firmly onto the floor when the end-effector is focused on manipulating the environment and does not require mobility. Grounding the platform enhances stability and conserves energy by allowing the motors to be turned off instead of relying on a complex braking system.

The sequence involves the mobile base using a linear actuator 126 to shift between a fixed state 610, where it is lowered 610, and a mobile state 620, where it is elevated, before returning to a fixed state 630. This adaptability in the base's positioning is used in the trajectory planning. A robotic manipulator, such as a robotic arm with seven degrees of freedom, can be mounted on this versatile base, resulting in a total of 33 states encompassing seven for angular robot positions, x, y, and yaw Cartesian coordinates, and the base's grounded or lifted status, along with their respective derivatives.

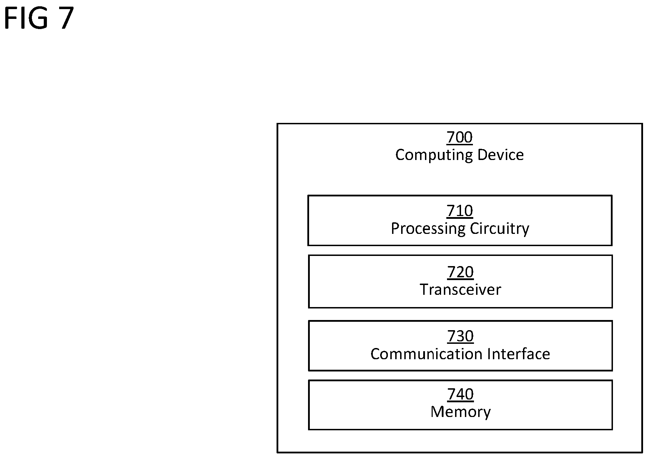

FIG. 7 illustrates a computing device 700 in accordance with aspects of the disclosure.

The computing device 700 may be identified with a central controller and be implemented as any suitable network infrastructure component, which may be implemented as a cloud/edge network server, controller, computing device, etc. The computing device 700 may serve the replanning supervisor 130, the pose planner 140, and the trajectory planner 150 in accordance with the various techniques discussed herein. To do so, the computing device 700 may include processor circuitry 710, a transceiver 720, a communication interface 730, and a memory 740. The components shown in FIG. 7 are provided for ease of explanation, and the computing device 700 may implement additional, fewer, or alternative components than those shown in FIG. 7.

The processor circuitry 710 may be operable as any suitable number and/or type of computer processor that may function to control the computing device 700. The processor circuitry 710 may be identified with one or more processors (or suitable portions thereof) implemented by the computing device 700. The processor circuitry 710 may be identified with one or more processors such as a host processor, a digital signal processor, one or more microprocessors, graphics processors, baseband processors, microcontrollers, an application-specific integrated circuit (ASIC), a portion (or the entirety of) a field-programmable gate array (FPGA), etc.

In any case, the processor circuitry 710 may be operable to execute instructions to perform arithmetic, logic, and/or input/output (I/O) operations and/or to control the operation of one or more components of the computing device 700 to perform various functions as described herein. The processor circuitry 710 may include one or more microprocessor cores, memory registers, buffers, clocks, etc. It may generate electronic control signals associated with the components of the computing device 700 to control and/or modify the operation of those components. The processor circuitry 710 may communicate with and/or control functions associated with the transceiver 720, the communication interface 730, and/or the memory 740. The processor circuitry 710 may additionally perform various operations to control the communications, communications scheduling, and/or operation of other network infrastructure components communicatively coupled to the computing device 700.

The transceiver 720 may be implemented as any suitable number and/or type of components operable to transmit and/or receive data packets and/or wireless signals in accordance with any suitable number and/or type of communication protocols. The transceiver 720 may include any suitable type of components to facilitate this functionality, including components associated with known transceiver, transmitter, and/or receiver operations, configurations, and implementations. Although shown as a transceiver in FIG. 7, the transceiver 720 may include any suitable number of transmitters, receivers, or combinations thereof, which may be integrated into a single transceiver or as multiple transceivers or transceiver modules. The transceiver 720 may include components typically identified with a radio frequency (RF) front end and include, for example, antennas, ports, power amplifiers (PAs), RF filters, mixers, local oscillators (LOs), low noise amplifiers (LNAs), up-converters, down-converters, channel tuners, etc.

The communication interface 730 may be implemented as any suitable number and/or type of components operable to facilitate the transceiver 720 to receive and/or transmit data and/or signals in accordance with one or more communication protocols, as discussed herein. The communication interface 730 may be implemented as any suitable number and/or type of components operable to interface with the transceiver 720, such as analog-to-digital converters (ADCs), digital-to-analog converters, intermediate frequency (IF) amplifiers and/or filters, modulators, demodulators, baseband processors, and the like. The communication interface 730 may thus operate in conjunction with the transceiver 720 and form part of an overall communication circuitry implemented by the computing device 700, which may be implemented via the computing device 700 to transmit commands and/or control signals to perform any of the functions described herein.

The memory 740 is operable to store data and/or instructions such that when the instructions are executed by the processor circuitry 710, they cause the computing device 700 to perform various functions as described herein. The memory 740 may be implemented as any known volatile and/or non-volatile memory, including, for example, read-only memory (ROM), random access memory (RAM), flash memory, a magnetic storage medium, a non-transitory computer-readable storage medium, an optical disk, erasable programmable read-only memory (EPROM), programmable read-only memory (PROM), etc. The memory 740 may be non-removable, removable, or a combination of the two. The memory 740 may be implemented as a non-transitory computer-readable medium storing one or more executable instructions such as logic, algorithms, code, etc.

As further discussed below, the instructions, logic, code, etc., stored in the memory 740 are represented by the various modules/engines as shown in FIG. 7. Alternatively, when implemented via hardware, the modules/engines shown in FIG. 7 associated with the memory 740 may include instructions and/or code to facilitate control and/or monitoring of the operation of such hardware components. In other words, the modules/engines shown in FIG. 7 are provided to facilitate an explanation of the functional association between hardware and software components. Thus, the processor circuitry 710 may execute the instructions stored in these respective modules/engines in conjunction with one or more hardware components to perform the various functions discussed herein.

Various aspects described herein may utilize one or more machine learning models for the replanning supervisor 130, the pose planner 140, and the trajectory planner 150. The term "model," as used herein, may be understood to mean any type of algorithm that provides output data from input data (e.g., any type of algorithm that generates or calculates output data from input data). A machine learning model can be executed by a computing system to progressively improve the performance of a particular task. In some aspects, the parameters of a machine learning model may be adjusted during a training phase based on training data. A trained machine learning model may be used during an inference phase to make predictions or decisions based on input data. In some aspects, the trained machine learning model may be used to generate additional training data. An additional machine learning model may be tuned during a second training phase based on the generated additional training data. A trained additional machine learning model may be used during an inference phase to make predictions or decisions based on input data.

The machine learning models described herein may take any suitable form or utilize any suitable technique (e.g., for training purposes). For example, each of the machine learning models may utilize supervised learning, semi-supervised learning, unsupervised learning, or reinforcement learning techniques.

In supervised learning, the model may be built using a training set of data that includes both the inputs and the corresponding desired outputs (illustratively, each input may be associated with a desired or expected output for that input). Each training instance may include one or more inputs and a desired output. Training may involve iterating through training instances and using an objective function to teach the model to predict the output for new inputs (illustratively, for inputs not included in the training set). In semi-supervised learning, a portion of the inputs in the training set may lack corresponding desired outputs (e.g., one or more inputs may not be associated with any desired or expected output).

In unsupervised learning, the model may be built from a training set of data that includes only inputs and no desired outputs. The unsupervised model may be used to find structure in the data (e.g., grouping or clustering of data points), for example, by discovering patterns in the data. Techniques that may be implemented in an unsupervised learning model may, for example, self-organizing maps, nearest-neighbor mapping, k-means clustering, and singular value decomposition.

Reinforcement learning models may include positive or negative feedback to improve accuracy. A reinforcement learning model may attempt to maximize one or more goals/rewards. Techniques that may be implemented in a reinforcement learning model may include, for example, Q-learning, temporal difference (TD), and deep adversarial networks.

Various aspects described herein may utilize one or more classification models. In a classification model, outputs may be restricted to a limited set of values (e.g., one or more classes). The classification model may output a class for an input set of one or more input values. An input set may include sensor data, such as image data, radar data, LIDAR (light detection and ranging) data, and the like. A classification model as described herein may, for example, classify certain driving conditions and/or environmental conditions, such as weather conditions, road conditions, and the like. References herein to classification models may contemplate a model that implements, for example, one or more of the following techniques: linear classifiers (e.g., logistic regression or naive Bayes classifier), support vector machines, decision trees, boosted trees, random forest, neural networks, or nearest neighbor.

Various aspects described herein may utilize one or more regression models. A regression model may output a numerical value from a continuous range based on an input set of one or more values (e.g., starting from or using an input set of one or more values). References herein to regression models may contemplate a model that implements, for example, one or more of the following techniques (or other suitable techniques): linear regression, decision trees, random forests, or neural networks.

A machine learning model described herein may be or include a neural network. The neural network may be any type of neural network, such as a convolutional neural network, an autoencoder network, a variational autoencoder network, a sparse autoencoder network, a recurrent neural network, a deconvolutional network, a generative adversarial network, a forward-thinking neural network, a sum-product neural network, and the like. The neural network can have any number of layers. The training of the neural network (e.g., the adaption of the layers of the neural network) may use or be based on any kind of training principle, such as backpropagation (e.g., using the backpropagation algorithm)

Machine learning examples can be realised as follows. The robot can be described via the following:

$$\sigma_i^{\text{config}}(t_i) = [q_1, q_2, q_3, a_0, x, y, \Psi]^T$$

$$\sigma_i^{\text{vel}}(t_i) = [\dot{q}_1, \dot{q}_2, \dot{q}_3, \dot{a}_0, \dot{x}, \dot{y}, \dot{\Psi}]^T$$

$$\sigma_i^{\text{accel}}(t_i) = [\ddot{q}_1, \ddot{q}_2, \ddot{q}_3, \ddot{a}_0, \ddot{x}, \ddot{y}, \ddot{\Psi}]^T$$

$$\sigma_i^{\text{jerk}}(t_i) = [\dddot{q}_1, \dddot{q}_2, \dddot{q}_3, \dddot{a}_0, \dddot{x}, \dddot{y}, \dddot{\Psi}]^T$$

$$\sigma_i^{\text{mask}}(t_i) = [d_1, d_2, d_3, d_4, d_5, d_6, d_7]^T \in \{0,1\}^7$$

$$g = [q_1^{\text{goal}}, q_2^{\text{goal}}, q_3^{\text{goal}}, a_0^{\text{goal}}, x^{\text{goal}}, y^{\text{goal}}, \Psi^{\text{goal}}]^T$$

where:

$\sigma_i^{\text{config}}(t_i)$ : position state vector of the degrees of freedom (DoF) (joint angles, actuator, base pose) at time $t_i$,
$q_i$ : joint positions of the end-effector,
$a_0$ : linear actuator status (mobile, fixed),
$(x, y, \Psi)$ : base pose - cartesian coordinates and yaw of robot mobile base,

$\sigma_i^{\text{vel}}(t_i)$ : velocity vector of each DoF at time $t_i$,

$\sigma_i^{\text{accel}}(t_i)$ : acceleration vector of each DoF at time $t_i$,

$\sigma_i^{\text{jerk}}(t_i)$ : jerk state vector at time $t_i$, which is the third time derivative of the position state at time $t_i$,

$\sigma_i^{\text{mask}}(t_i)$ : mask vector indicating which degrees of freedom are enabled (1) or disabled (0) at time step $t_i$, and
$g$ : is the overall goal for each DoF of the robot.

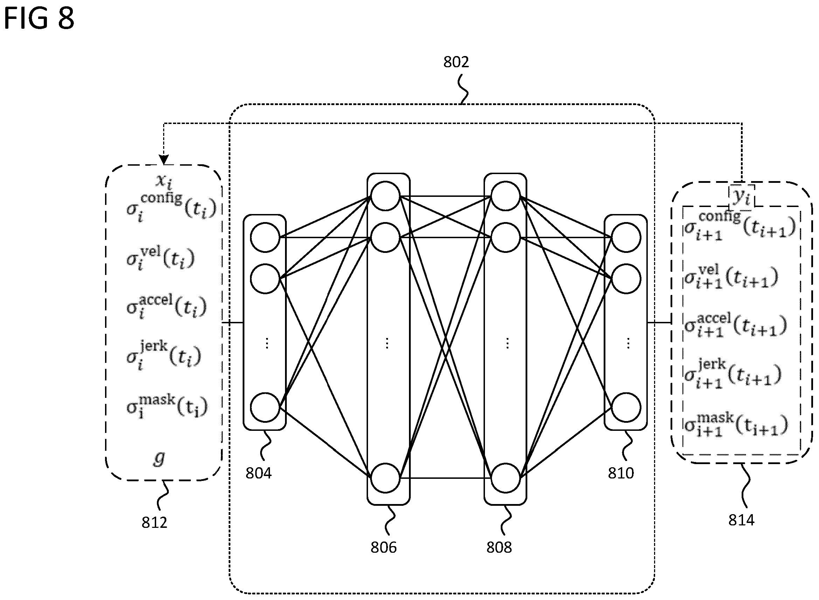

Referring to FIG. 8, there is shown a view 800 of a neural network 802 for controlling the robot 160. The neural network 802 comprises an input layer 804, a pair of hidden layers 806, 808 and an output layer 810. The input layer 802 is arranged to receive an input feature vector 812. The output layer 810 is arranged to produce an output feature vector 814. At each time iteration, the output feature vector 814 is fed back to form part for the input feature vector 810 for the next time iteration.

In the example described, it will be appreciated that the dimension of the goal, $g$, is given $g \in R^7$ due to the seven degrees of freedom, and that $\sigma_i(t_i) = [\sigma_i^{\text{config}}(t_i), \sigma_i^{\text{vel}}(t_i), \sigma_i^{\text{accel}}(t_i), \sigma_i^{\text{jerk}}(t_i), \sigma_i^{\text{mask}}(t_i)] \in R^{35}$, which is the concatenation of $\sigma_i^{\text{config}}(t_i), \sigma_i^{\text{vel}}(t_i), \sigma_i^{\text{accel}}(t_i), \sigma_i^{\text{jerk}}(t_i)$ and $\sigma_i^{\text{mask}}(t_i)$. Therefore, the input feature vector, $x_i$, 812 is given by the concatenation $x_i = [\sigma_i(t_i), g] \in R^{42}$. The output feature vector 814, $y_i$, is given by $y_i = \sigma_{i+1}(t_{i+1}) \in R^{35}$, where

$$\sigma_{i+1}(t_{i+1}) = [\sigma_{i+1}^{\text{config}}(t_{i+1}), \sigma_{i+1}^{\text{vel}}(t_{i+1}), \sigma_{i+1}^{\text{accel}}(t_{i+1}), \sigma_{i+1}^{\text{jerk}}(t_{i+1}), \sigma_{i+1}^{\text{mask}}(t_{i+1})] \in R^{35}$$.

Accordingly, the input layer 804 comprises 42 nodes, since it also includes the goal, and the output layer 810 comprises 35 nodes. The first 806 and second 808 hidden layers can comprise respective numbers of nodes. In the example depicted in figure 8, the hidden layers each comprise 128 nodes. Each hidden layer comprises a respective activation function. In the example shown in figure 8, the activation function is the ReLu activation function. Each of the layers are fully connected layers.

The neural network is trained using a labelled dataset, D and supervised learning to minimise a MSE cost function in which a labelled dataset, D, given by

$$\mathcal{D} = \{(x_i, y_i)\}_{i=1}^{N} \text{ comprises input-output pairs } (x_i, y_i),$$

where

$x_i \in R^{42}$ is the input feature vector (e.g. the full robot state at time $t_i$ and goal, $g$),

$y_i \in R^{35}$ is the target output feature vector (e.g. the desired next state configuration at time $t_{i+1}$), and

$N$ is the number of samples.

An example of such an input-output pair ($x_i, y_i$) is given below:

| Component | Features | Values (Example) |
|---|---|---|
| Configuration | $q_1, q_2, q_3, q_0, x, y, \Psi$ | 0.1, 0.2, 0.3, 1.0, 0.5, 0.0, 0.05 |
| Velocity | $\dot{q}_1, \dot{q}_2, \dot{q}_3, \dot{a}_0, \dot{x}, \dot{y}, \dot{\Psi}$ | 0.05, 0.01, -0.02, 0.0, 0.1, 0.0, 0.01 |
| Acceleration | $\ddot{q}_1, \ddot{q}_2, \ddot{q}_3, \ddot{a}_0, \ddot{x}, \ddot{y}, \ddot{\Psi}$ | 0.01, 0.00, -0.01, 0.0, 0.02, 0.0, 0.001 |
| Jerk | $\dddot{q}_1, \dddot{q}_2, \dddot{q}_3, \dddot{a}_0, \dddot{x}, \dddot{y}, \dddot{\Psi}$ | 0.001, 0.0, -0.002, 0.0, 0.003, 0.0, 0.0 |
| Mask | $d_1, d_2, d_3, d_4, d_5, d_6, d_7$ | 1, 1, 1, 1, 1, 1, 1 |
| Goal | $q_1^{goal}, q_2^{goal}, q_3^{goal}, a_0^{goal}, x^{goal}, y^{goal}, \Psi^{goal}$ | 0.5, 0.5, 0.5, 1.0, 2.0, 2.0, 0.2 |

Therefore, the input feature vector or training sample, $x_i$, could be realised in Python as follows:

```
[ # Configuration (7)
0.10, 0.20, 0.30, 1.0, 0.5, 0.0, 0.05,
 # Velocity (7)
0.05, 0.01, -0.02, 0.0, 0.10, 0.0, 0.01,
# Acceleration (7)
0.01, 0.00, -0.01, 0.0, 0.02, 0.0, 0.001,
# Jerk (7)
0.001, 0.0, -0.002, 0.0, 0.003, 0.0, 0.0,
# Mask (7)
1, 1, 1, 1, 1, 1, 1,
# Goal vector (7)
0.5, 0.5, 0.5, 1.0, 2.0, 2.0, 0.2
]
```

A corresponding output vector or labelled output training sample, $y_i$, could be realised in Python as follows

```
[ # Configuration (7)
0.11, 0.22, 0.31, 1.0, 0.6, 0.0, 0.06,
# Velocity (7)
0.06, 0.02, -0.01, 0.0, 0.09, 0.0, 0.015,
# Acceleration (7)
0.02, 0.01, -0.005, 0.0, 0.01, 0.0, 0.002,
# Jerk (7)
0.002, 0.001, -0.003, 0.0, 0.002, 0.0, 0.001,
# Mask (7)
1, 1, 1, 1, 1, 1, 1
]
```

The disclosed aspects offer significant advantages for autonomous mobile manipulator navigation in industrial settings. It features a motion planning method with dynamic adjustment of the search space state. A hybrid ground vehicle can switch between mobile and fixed platforms, optimizing energy efficiency and enhancing robustness. Additionally, the motion planning application can seamlessly perform this mobile-fixed transformation in real time to effectively reach its target.

The aspects of the disclosure provide a system for autonomous mobile manipulator navigation in industry scenarios. The motion planning method has dynamic search space state adjustment. A hybrid ground vehicle can change from mobile to fixed platforms to save energy and enhance robustness. The motion planning application can use the mobile-fixed transformation on the fly to reach a target.

The techniques of this disclosure may also be described in the following examples.

Example 1. An apparatus, comprising: an interface operable to receive sensor data and generate a map representation of an environment of a robot; processing circuitry operable to: plan a sequence of states to direct the robot to a task goal of the robot based on the map representation and a kinematic state of the robot for a plurality of degrees of freedom; determine a time-dependent trajectory of the robot to the task goal based on the sequence of states by dynamically enabling or disabling one or more of the plurality of degrees of freedom; and generate a movement instruction to control movement of the robot based on the time-dependent trajectory.

Example 2. The apparatus of example 1, wherein the time-dependent trajectory is based on position and velocity.

Example 3. The apparatus of any one of examples 1-2, wherein the processing circuitry is further operable to: assess a feasibility of the time-dependent trajectory; and if the time-dependent trajectory is not feasible, plan a new sequence of states and determine a new time-dependent trajectory for the robot.

Example 4. The apparatus of any one of examples 1-3, wherein the processing circuitry is further operable to: if the time-dependent trajectory is not feasible, maintain a portion of the time-dependent trajectory corresponding to an duration to plan the new sequence of states and determine the new time-dependent trajectory.

Example 5. The apparatus of any one of examples 1-4, wherein the feasibility of the time-dependent trajectory is assessed by comparing the map representation with an updated map representation that is generated while the robot is in a process of achieving the task goal.

Example 6. The apparatus of any one of examples 1-5, wherein the time-dependent trajectory of the robot to the task goal is determined by sampling random states represented as nodes of a directed graph, and wherein the one or more of the plurality of degrees of freedom are dynamically enabled or disabled by selecting one of the nodes where a cost function associated with the time-dependent trajectory is minimized.

Example 7. The apparatus of any one of examples 1-6, wherein the cost function is based on distance, velocity, jerk, time, or robot stability.

Example 8. The apparatus of any one of examples 1-7, wherein the sequence of states to direct the robot to the task goal is additionally based on a kinematic state of a mobile base of the robot, and wherein the processing circuitry is further operable to generate a movement instruction to control movement of the mobile base based on the time-dependent trajectory.

Example 9. The apparatus of any one of examples 1-8, wherein the mobile base comprises a linear actuator to transition the mobile base between a fixed and a mobile state.

Example 10. The apparatus of any one of examples 1-9, wherein the task goal is of an end-effector of the robot.

Example 11. A component of a system, comprising: processing circuitry; and

a non-transitory computer-readable storage medium including instructions that, when executed by the processing circuitry, cause the processing circuitry to: generate a map representation of an environment of a robot based on received sensor data; plan a sequence of states to direct the robot to a task goal of the robot based on the map representation and a kinematic state of the robot for a plurality of degrees of freedom; determine a time-dependent trajectory of the robot to the task goal based on the sequence of states by dynamically enabling or disabling one or more of the plurality of degrees of freedom to minimize a cost function associated with the time-dependent trajectory; and generate a movement instruction to control movement of the robot based on the time-dependent trajectory.

Example 12. The component of example 11, wherein the time-dependent trajectory is based on position and velocity.

Example 13. The component of any one of examples 11-12, wherein the instructions further cause the processing circuitry to: assess a feasibility of the time-dependent trajectory; and if the time-dependent trajectory is not feasible, plan a new sequence of states and determine a new time-dependent trajectory for the robot.

Example 14. The component of any one of examples 11-13, wherein the instructions further cause the processing circuitry to: if the time-dependent trajectory is not feasible, maintain a portion of the time-dependent trajectory corresponding to a duration to plan the new sequence of states and determine the new time-dependent trajectory.

Example 15. The component of any one of examples 11-14, wherein the feasibility of the time-dependent trajectory is assessed by comparing the map representation with an updated map representation that is generated while the robot is in a process of achieving the task goal.

Example 16. The component of any one of examples 11-15, wherein the time-dependent trajectory of the robot to the task goal is determined by sampling random states represented as nodes of a directed graph, and wherein the one or more of the plurality of degrees of freedom are dynamically enabled or disabled by selecting one of the nodes where a cost function associated with the time-dependent trajectory is minimized.

Example 17. The component of any one of examples 11-16, wherein the cost function is based on distance, velocity, jerk, time, or robot stability.

Example 18. The component of any one of examples 11-17, wherein the sequence of states to direct the robot to the task goal is additionally based on a kinematic state of a mobile base of the robot, and wherein the processing circuitry is further operable to generate a movement instruction to control movement of the mobile base based on the time-dependent trajectory.

Example 19. The component of any one of examples 11-18, wherein the mobile base comprises a linear actuator to transition the mobile base between a fixed and a mobile state.

Example 20. The component of any one of examples 11-19, wherein the task goal is of an end-effector of the robot.

While the foregoing has been described in conjunction with exemplary aspect, it is understood that the term "exemplary" is merely meant as an example, rather than the best or optimal. Accordingly, the disclosure is intended to cover alternatives, modifications and equivalents, which may be included within the scope of the disclosure.

Although specific aspects have been illustrated and described herein, it will be appreciated by those of ordinary skill in the art that a variety of alternate and/or equivalent implementations may be substituted for the specific aspects shown and described without departing from the scope of the present application. This application is intended to cover any adaptations or variations of the specific aspects discussed herein.

## Claims

1. An apparatus, comprising:

   an interface means for receiving sensor data and generating a map representation of an environment of a robot;
   processing means for:

   planning a sequence of states to direct the robot to a task goal of the robot based on the map representation and a kinematic state of the robot for a plurality of degrees of freedom;
   determining a time-dependent trajectory of the robot to the task goal based on the sequence of states by dynamically enabling or disabling one or more of the plurality of degrees of freedom; and
   generating a movement instruction to control movement of the robot based on the time-dependent trajectory.

2. The apparatus of claim 1, wherein the time-dependent trajectory is based on position and velocity.

3. The apparatus of any of claims 1-2, wherein the processing means is further for:

   assessing a feasibility of the time-dependent trajectory; and
   if the time-dependent trajectory is not feasible, planning a new sequence of states and determine a new time-dependent trajectory for the robot.

4. The apparatus of claim 3, wherein the processing means is further for:
   if the time-dependent trajectory is not feasible, maintaining a portion of the time-dependent trajectory corresponding to a duration to plan the new sequence of states and determining the new time-dependent trajectory.

5. The apparatus of claim 4, wherein the feasibility of the time-dependent trajectory is assessed by comparing the map representation with an updated map representation that is generated while the robot is in a process of achieving the task goal.

6. The apparatus of any of claims 1-5,

   wherein the time-dependent trajectory of the robot to the task goal is determined by sampling random states represented as nodes of a directed graph, and
   wherein the one or more of the plurality of degrees of freedom are dynamically enabled or disabled by selecting one of the nodes where a cost function associated with the time-dependent trajectory is minimized.

7. The apparatus of claim 6, wherein the cost function is based on distance, velocity, jerk, time, or robot stability.

8. The apparatus of any of claims 1-7,

   wherein the sequence of states to direct the robot to the task goal is additionally based on a kinematic state of a mobile base of the robot, and
   wherein the processing means is further for generating a movement instruction to control movement of the mobile base based on the time-dependent trajectory.

9. The apparatus of claim 8, wherein the mobile base comprises a linear actuator to transition the mobile base between a fixed and a mobile state.

10. The apparatus of claim 8, wherein the task goal is of an end-effector of the robot.

11. A component of a system, comprising:

processing means; and
a non-transitory computer-readable storage medium including instructions that, when executed by the processing means, cause the processing means to:

generate a map representation of an environment of a robot based on received sensor data;
plan a sequence of states to direct the robot to a task goal of the robot based on the map representation and a kinematic state of the robot for a plurality of degrees of freedom;
determine a time-dependent trajectory of the robot to the task goal based on the sequence of states by dynamically enabling or disabling one or more of the plurality of degrees of freedom to minimize a cost function associated with the time-dependent trajectory; and
generate a movement instruction to control movement of the robot based on the time-dependent trajectory.

12. The component of claim 11, wherein the time-dependent trajectory is based on position and velocity.

13. The component of any of claims 11-12, wherein the instructions further cause the processing means to:

assess a feasibility of the time-dependent trajectory; and
if the time-dependent trajectory is not feasible, plan a new sequence of states and determine a new time-dependent trajectory for the robot.

14. The component of claim 13, wherein the instructions further cause the processing means to:
if the time-dependent trajectory is not feasible, maintain a portion of the time-dependent trajectory corresponding to a duration to plan the new sequence of states and determine the new time-dependent trajectory.

15. The component of claim 14, wherein the feasibility of the time-dependent trajectory is assessed by comparing the map representation with an updated map representation that is generated while the robot is in a process of achieving the task goal.
the robot.

# FIG 1

EP 4 671 905 A1

**100**
Autonomous Navigation System
for Mobile Robots

**110**
Task Goal

Sensors

**122**
Depth Camera

**120**
Map Represention
(200 in FIG. 2)

**124**
Wheel Encoders

**126**
Linear Actuator

**128**
End Effector

**130**
Replanning Supervisor
(300 in FIG. 3)

Task Goal
$(EE_d)$

Current
Pose for
Degrees of
Freedom
$(x_i)$

**140**
Pose Planner

Sequence of States
$( \Sigma = \{\sigma_1, \ldots, \sigma_n\} )$

**150**
Trajectory Planner

**128S**
End-Effector States

**126S**
Linear Actuator States

**124S**
Wheel States

**160**
Hybrid Ground
Autonomous
Manipulator
Vehicle
(HGAMV)

FIG 2

200
Hybrid Ground Autonomous Manipulator Vehicle (HGAMV)
in Voxelized Map Representation
(120 in FIG. 1)

EP 4 671 905 A1

FIG 3

# FIG 4

Geometric Motion Planning Pseudocode

```
INPUT: x_i, EE_d
OUTPUT: Σ = {σ_1, …, σ_n}
1  Tree ← INSERT(p_i ← x_i)
2   WHILE TRUE:
3     p_r ← RANDOM()
4     p_nearest ← NEAREST(p_r, Tree)
5     p_closest = p_nearest[0]
6     IF FEASIBLE(p_r, p_closest):
7       cost ← COST(p_r, p_closest)
8       Tree ← INSERT(p_r, cost)
9       FOREACH p_near IN p_nearest[1:]:
10        IF FEASIBLE(p_r, p_near):
11          IF IMPROVED_COST(p_r, p_near):
12            Tree ← REWIRE(p_r, p_near)
13          ENDIF
14        ENDIF
15      ENDFOREACH
16      IF END_CONDITION(p_r, EE_d):
17        Σ ← CREATE_SOLUTION()
18        BREAK
19      ENDIF
20    ENDIF
21  ENDWHILE
```

# FIG 5

500
Directed Graph with
Dynamic State Generation

joints configuration

linear actuator state

Cartesian coordinates of base

orientation angle of base

$$\begin{bmatrix} q_1 \\ q_2 \\ q_3 \\ a_0 \\ x \\ y \\ \psi \end{bmatrix}$$

510

520

550

530

540

560

$$\begin{bmatrix} q_1 \\ q_2 \\ q_3 \\ a_{0r} \\ x \\ y \\ \psi \end{bmatrix}$$

$$\begin{bmatrix} q_{1r} \\ q_{2r} \\ q_{3r} \\ a_0 \\ x \\ y \\ \psi \end{bmatrix}$$

# FIG 6

610
fixed robotic arm base
(base lowered)

620
mobile robotic arm base
(base elevated)

630
fixed robotic arm base
(base lowered)

**FIG 7**

700
Computing Device

710
Processing Circuitry

720
Transceiver

730
Communication Interface

740
Memory

FIG 8

$$x_i$$

$$\sigma_i^{\text{config}}(t_i)$$

$$\sigma_i^{\text{vel}}(t_i)$$

$$\sigma_i^{\text{accel}}(t_i)$$

$$\sigma_i^{\text{jerk}}(t_i)$$

$$\sigma_i^{\text{mask}}(t_i)$$

$$g$$

$$y_i$$

$$\sigma_{i+1}^{\text{config}}(t_{i+1})$$

$$\sigma_{i+1}^{\text{vel}}(t_{i+1})$$

$$\sigma_{i+1}^{\text{accel}}(t_{i+1})$$

$$\sigma_{i+1}^{\text{jerk}}(t_{i+1})$$

$$\sigma_{i+1}^{\text{mask}}(t_{i+1})$$

802 804 806 808 810 812 814

EP 4 671 905 A1

Europäisches
Patentamt

European
Patent Office

Office européen
des brevets

# EUROPEAN SEARCH REPORT

**Application Number**

EP 25 17 9613

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Shin Dong Hun ET AL: "Motion Planning for a Mobile Manipulator with Imprecise Locomotion", , 31 October 2003 (2003-10-31), XP093319250, Retrieved from the Internet: URL:https://www.ri.cmu.edu/pub_files/pub4/shin_dong_hun_2003_1/shin_dong_hun_2003_1.pdf | 1,2,8, 10-12 | INV. G05D1/644 G05D1/689 G05D107/60 B25J5/00 B25J9/16 G05D1/246 G05D109/10 |
| Y | * Abstract, page 1 right column paragraph II, page 2 left column, page 4 paragraph III, page 5 left column, page 6 right column top paragraph, Figures 4-5 * ----- | 3-7,9, 13-15 | |
| Y | CHEN HANLIN ET AL: "A Hierarchical Motion Planning Method for Mobile Manipulator", SENSORS, vol. 23, no. 15, 4 August 2023 (2023-08-04), page 6952, XP093319031, CH ISSN: 1424-8220, DOI: 10.3390/s23156952 * Page 5 top paragraph * ----- | 3-5, 13-15 | **TECHNICAL FIELDS SEARCHED (IPC)** G05D B25J G05B |
| Y | US 2010/168950 A1 (NAGANO MASAKUNI [JP]) 1 July 2010 (2010-07-01) * Paragraphs [0040], [0078], [0086]. * ----- | 6,7 | |
| Y | US 10 472 095 B1 (VANCE JONATHAN B [US] ET AL) 12 November 2019 (2019-11-12) * Column 5 lines 26-45, figure 3 * ----- | 9 | |

The present search report has been drawn up for all claims

| Place of search | Date of completion of the search | Examiner |
|---|---|---|
| Munich | 16 October 2025 | Roch, Vincent |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................
& : member of the same patent family, corresponding document

EPO FORM 1503 03.82 (P4C01)

# EP 4 671 905 A1

## ANNEX TO THE EUROPEAN SEARCH REPORT
## ON EUROPEAN PATENT APPLICATION NO.

EP 25 17 9613

16-10-2025

| Patent document cited in search report | Publication date | Patent family member(s) | | Publication date |
|---|---|---|---|---|
| US 2010168950 A1 | 01-07-2010 | CN | 101770235 A | 07-07-2010 |
| | | JP | 4730440 B2 | 20-07-2011 |
| | | JP | 2010155328 A | 15-07-2010 |
| | | US | 2010168950 A1 | 01-07-2010 |
| US 10472095 B1 | 12-11-2019 | CA | 3046909 A1 | 07-03-2020 |
| | | CN | 110884884 A | 17-03-2020 |
| | | EP | 3620393 A1 | 11-03-2020 |
| | | JP | 7449656 B2 | 14-03-2024 |
| | | JP | 2020062742 A | 23-04-2020 |
| | | US | 10472095 B1 | 12-11-2019 |

EPO FORM P0459

For more details about this annex : see Official Journal of the European Patent Office, No. 12/82